# EUROPEAN PATENT APPLICATION

(11) **EP 4 764 093 A1**
(43) Date of publication of application: **24.06.2026**
(21) Application number: 24871378.6
(22) Date of filing: 31.05.2024
(51) Int. Cl.: E02F 9/24, E02F 9/26

(54) **CONSTRUCTION MACHINE**

(30) Priority: 28.09.2023 JP 2023166673
(71) Applicant: Hitachi Construction Machinery Co., Ltd., Tokyo 110-0015 (JP)
(72) Inventor: SUGAWARA, Takuma, Tsuchiura-shi, Ibaraki 300-0013 (JP); HAGIWARA, Naoki, Tsuchiura-shi, Ibaraki 300-0013 (JP); MIZOGUCHI, Kazuhiko, Tsuchiura-shi, Ibaraki 300-0013 (JP)
(74) Representative: Manitz Finsterwald Patent- und Rechtsanwaltspartnerschaft mbB
(86) International application number: PCT/JP2024/020082
(87) International publication number: WO 2025/069568

(57) **Abstract**

A construction machine includes a machine body, a cabin provided on the machine body and occupied by an operator, a surroundings detecting device for detecting an obstacle in the surroundings of the machine body, a warning device provided in the cabin, and a controller that controls the warning device to attract attention when the surroundings detecting device detects an obstacle in a detection range set in advance, in which the construction machine includes a work state switching device that switches the construction machine between a workable state and an unworkable state, and the controller sets a first range predefined in the surroundings of the machine body as the detection range when the work state switching device has switched to the workable state, and sets a second range, as the detection range, having at least a portion defined as being smaller than the first range when the work state switching device has switched to the unworkable state.
Thus, it is possible to report the presence of an obstacle in the surroundings to the operator while restraining unnecessary warnings in the unworkable state.

## Description

### Technical Field

The present invention relates to a construction machine.

### Background Art

There have been construction machines such as hydraulic excavators that, in order to prevent contact accidents, sense an obstacle such as a person or an object that is present in their surroundings and report its presence to their operator. For example, such a construction machine disclosed in Patent Document 1 is known.

Patent Document 1 discloses a surroundings monitoring apparatus for a work machine that includes a warning outputting unit for outputting a warning to an operator, including work machine state determining means for determining the state of the work machine, person presence/non-presence determining means for determining the presence or non-presence of a person in the surroundings of the work machine, and warning controlling means for controlling the warning outputting unit, in which, when it has been determined that the work machine is not in a workable state and also when it has been determined that a person is present in the surroundings of the work machine, the warning controlling means control the warning outputting unit to output the warning when it is subsequently determined that the work machine is in the workable state.

### Prior Art Document

### Patent Document

Patent Document 1: JP-2014-181509-A

### Summary of the Invention

### Problems to be Solved by the Invention

According to the above prior art, when a worker is detected in the surroundings of the construction machine while the construction machine is in an unworkable state, a warning is halted, and when the construction machine enters a workable state in which the construction machine is operable, a warning is output anew. However, if the operator of the construction machine starts to operate immediately after the construction machine becomes possible to operate, then a delay is caused to occur until the operator operates to stop the construction machine after a warning has been issued. This tends to raise concern over the detection of workers in the surroundings of the construction machine and failures to sufficiently display the meaning of warnings. On the other hand, while the construction machine is in the unworkable state, since it does not operate, the necessity to output a warning to the operator is low even in the case of presence of a worker in the surroundings of the construction machine, and it is considered that the operator may feel annoyed by warnings. In particular, in the case where a worker in the surroundings of a machine main body (machine body) approaches the operator in the cabin and talks to the operator, since the operator has switched the work state to the unworkable state and recognizes the presence of the worker, the necessity to output a warning to the operator is lower, and it is considered that the operator may feel more strongly annoyed by warnings.

The present invention has been devised in view of the foregoing. It is an object of the present invention to provide a construction machine that is able to report the presence of an obstacle in its surroundings to the operator while restraining unnecessary warnings in an unworkable state.

### Means for Solving the Problems

The present application includes a plurality of means for solving the above problems. According to one example of such means, there is provided a construction machine including a machine body, a cabin provided on the machine body and occupied by an operator, a surroundings detecting device for detecting an obstacle in the surroundings of the machine body, a warning device provided in the cabin, and a controller that controls the warning device to attract attention when the surroundings detecting device detects an obstacle in a detection range set in advance, in which the construction machine includes a work state switching device that switches the construction machine between a workable state and an unworkable state, and the controller is configured to set a first range predefined in the surroundings of the machine body as the detection range when the work state switching device has switched to the workable state, and to set a second range as the detection range, the second range having at least a portion defined as being smaller than the first range, when the work state switching device has switched to the unworkable state.

### Advantages of the Invention

According to the present invention, it is possible to report the presence of an obstacle in surroundings to an operator while restraining unnecessary warnings in an unworkable state.

### Brief Description of the Drawings

[Fig. 1] Fig. 1 is a view schematically illustrating a configuration of a hydraulic excavator as an example of a construction machine.
[Fig. 2] Fig. 2 is a functional block diagram illustrating a functional section with regard to detection of surroundings among processing functions of a controller together with related configurational details.
[Fig. 3A] Fig. 3A is a view illustrating an example defined as a detection range.
[Fig. 3B] Fig. 3B is a view illustrating another example defined as a detection range.
[Fig. 3C] Fig. 3C is a view illustrating still another example defined as a detection range.
[Fig. 4] Fig. 4 is a flowchart illustrating the contents of a surroundings detecting process according to a first embodiment.
[Fig. 5] Fig. 5 is a flowchart illustrating the contents of a surroundings detecting process according to a third embodiment.

### Modes for Carrying Out the Invention

Embodiments of the present invention will be described hereinbelow with reference to the drawings. Although a hydraulic excavator will be described below as an example of a construction machine, the present invention is also applicable to other construction machines including dump trucks and wheel loaders, for example.

### <First Embodiment>

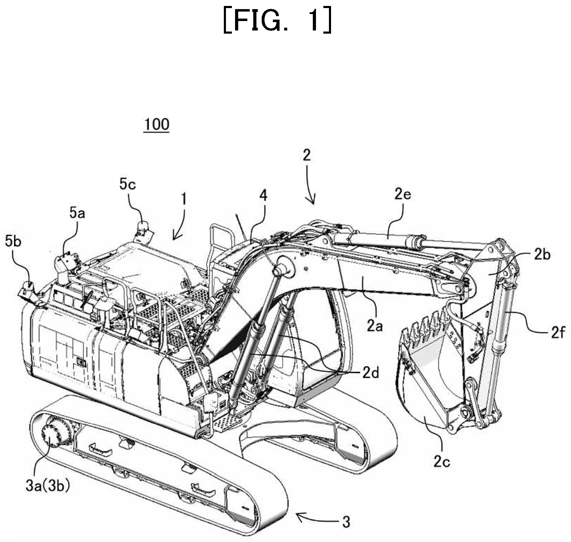

A first embodiment of the present invention will be described below with reference to Figs. 1 through 4.

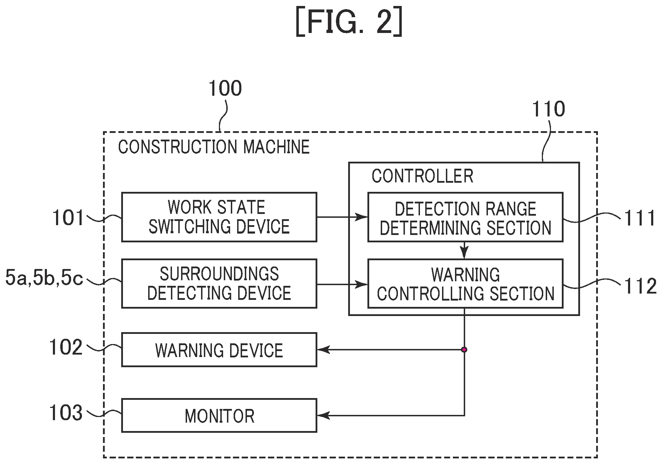

Fig. 1 is a view schematically illustrating a configuration of a hydraulic excavator as an example of a construction machine according to the present embodiment. Fig. 2 is a functional block diagram illustrating a functional section with regard to detection of surroundings among processing functions of a controller together with related configurational details.

As illustrated in Fig. 1, a hydraulic excavator 100 as a construction machine includes a crawler type lower track structure 3 and an upper swing structure 1 that is swingably mounted on an upper portion of the lower track structure 3 and configures, with the lower track structure 3, a machine main body (hereinafter also referred to as a machine body) of the construction machine.

The lower track structure 3 is driven by left and right track hydraulic motors 3a and 3b (in Fig. 1, only one is illustrated while only a reference character of the other is depicted in parentheses). The upper swing structure 1 is driven by the torque generated by a swing hydraulic motor (not depicted) to swing in leftward and rightward directions with respect to the lower track structure 3.

A cabin 4 that is occupied by an operator is mounted on one side (e.g., left side) on a front portion of the upper swing structure 1. A multi-joint front work implement 2 for forming target topography or the like, is mounted on the front portion of the upper swing structure 1 alongside (e.g., right side) of the cabin 4. A direction in which the front work implement 2 is mounted on the upper swing structure 1 represents a forward direction of the machine body.

The front work implement 2 includes a boom 2a, an arm 2b, and a bucket 2c that are vertically independently rotate are coupled together. The boom 2a, the arm 2b, and the bucket 2c are driven respectively by a boom cylinder 2d, an arm cylinder 2e, and a bucket cylinder 2f.

Cameras 5a, 5b, and 5c for capturing images in respective directions are disposed as a surroundings detecting device respectively at central, and right and left sides of a rear portion of the upper swing structure 1. The surroundings detecting device may alternatively include, rather than the cameras, a LiDAR (Light Detection And Ranging) for detecting the position and properties of a target by way of laser irradiation or a system for identifying the position and feature of a worker by detecting an RFID (Radio Frequency Identification) tag worn by the worker.

The cabin 4 houses therein operation levers (not depicted) for generating operation signals (pilot pressures if a hydraulic drive system is adopted) that drive the boom cylinder 2d, the arm cylinder 2e, the bucket cylinder 2f, the swing hydraulic motor (not depicted), and the track hydraulic motors 3a and 3b depending on the operation directions and the operation amounts, to cause the boom 2a, the arm 2b, the bucket 2c, the upper swing structure 1, and the lower track structure 3 to operate by the operation signals, a warning device 102 such as a buzzer for reporting the detection of an obstacle such as a person or an object in the surroundings of the hydraulic excavator 100 to the operator in the cabin 4, a touch-panel monitor 103 having a display function for displaying various items of information for the operator (including a function as a reporting device and a warning device for reporting the detection of an obstacle to the operator) and an input function for inputting various settings from the operator, a work state switching device 101 for selectively switching the hydraulic excavator 100 between a workable state capable of operating and an unworkable state incapable of operating (e.g., a gate lock lever for switching the operation signals output from the operation levers between effective and ineffective), and a controller 110 for controlling overall operation of the hydraulic excavator 100.

According to the present embodiment where the hydraulic excavator 100 is illustrated as the construction machine by way of example, the gate lock lever is exemplified as the work state switching device 101.
However, if the construction machine is another machine such as a dump truck or a wheel loader, then a shift lever or a side brake corresponds to a work state switching device.

As illustrated in Fig. 2, the controller 110 includes a detection range determining section 111 and a warning controlling section 112.

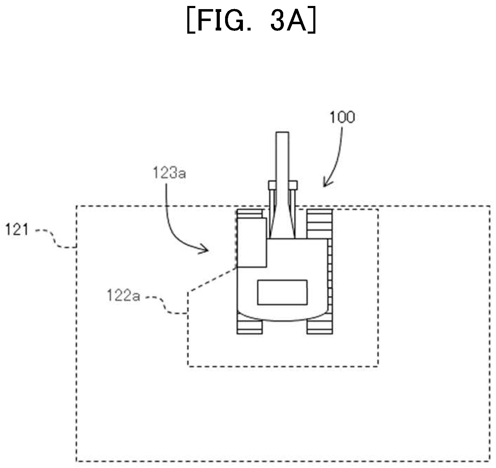

The detection range determining section 111 sets a first range 121 predefined in the surroundings of the machine body as a detection range when the work state switching device 101 has been switched to the workable state, and sets a second range 122a, 122b, or 122c predefined in the surroundings of the machine body as a detection range (see Figs. 3A through 3C) when the work state switching device 101 has been switched to the unworkable state.

Figs. 3A through 3C are views illustrating examples defined as detection ranges.

As illustrated in Figs. 3A through 3C, the first range 121 is defined in the surroundings of the machine body of the hydraulic excavator 100 so as to surround the machine body, and the second ranges 122a, 122b, and 122c are defined that are arranged so as to have at least a portion narrower (smaller) than the first range 121.

The first range 121 is a range defined on the basis of a range that can be reached by the structure of the hydraulic excavator 100 including the front work implement 2 while the hydraulic excavator 100 is in operation (excavating operation, swinging operation, or traveling operation) in the workable state, for example, and is a range to attract attention of the operator (as a warning) to the presence of an obstacle such as a worker in this range. The second ranges 122a, 122b, and 122c are ranges defined on the basis of ranges that can be reached by the upper swing structure 1 in operation (swinging operation) immediately after the hydraulic excavator 100 has been switched from the unworkable state to the workable state, are ranges that are set narrower than the first range 121 in at least portion within the first range 121, and are ranges to attract attention of the operator (as a warning) to the presence of an obstacle such as a worker in the ranges. Moreover, the second ranges 122a, 122b, and 122c include respective narrower portions 123a, 123b, and 123c which are defined such that ranges set on a side (i.e., a left side) of the cabin 4 are shifted to one side (e.g., a left side) with respect to the machine body to be narrower (smaller) than ranges set in other directions.

According to the example illustrated in Fig. 3A, for instance, the first range 121 is defined in the surroundings of the machine body of the hydraulic excavator 100, and the second range 122a is defined at a position closer to the machine body than the first range 121. The second range 122a is defined as being smaller than the first range 121 in the surroundings of the machine body (here, on left and right sides and a rear side). Furthermore, the second range 122a includes the narrower portion 123a that is defined as being narrower (smaller) than ranges set in other directions, on a side of the cabin 4 that is shifted to a left side of the machine body, i.e., in a front left direction.

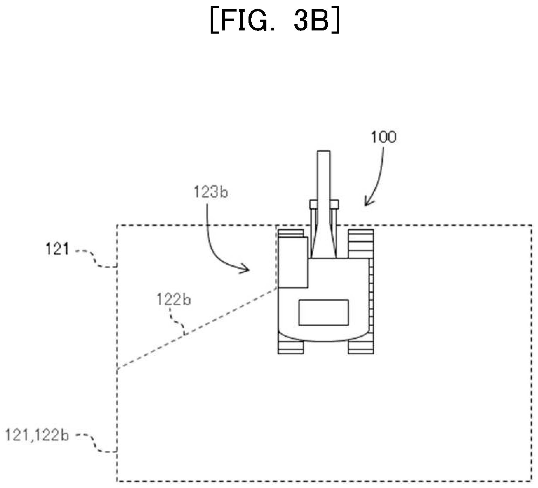

According to the example illustrated in Fig. 3B, the first range 121 is defined in the surroundings of the machine body of the hydraulic excavator 100, and the second range 122b is defined as including the narrower portion 123b that is defined as being narrower (smaller) than the first range 121 on a side of the cabin 4 that is shifted to a left side of the machine body, i.e., in a front left direction. Except for the narrower portion 123b, the first range 121 and the second range 122 have common boundaries. The second range 122b is thus not limited to being smaller than the first range 121 (i.e., being defined as illustrated in Fig. 3A) along the entire periphery of the machine body.

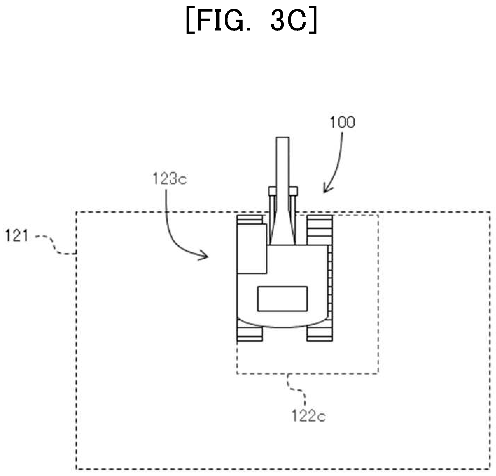

According to the example illustrated in Fig. 3C, the first range 121 is defined in the surroundings of the machine body of the hydraulic excavator 100, and the second range 122c is defined at a position closer to the machine body than the first range 121. The second range 122c is defined as being smaller than the first range 121 in the surroundings of the machine body (here, on left and right sides and a rear side). Furthermore, the second range 122c includes the narrower portion 123c that is defined as being particularly narrower than ranges set in other directions on the left side of the cabin 4 of the machine body. Stated otherwise, the second range 122c is defined such that a side face of the machine body and a boundary of the second range 122c coincide with each other and no detection range exists in the narrower portion 123c on the left side of the cabin 4. The second range 122c is thus not limited to having a detection range left in a predetermined direction (on the left side of the cabin of the machine body) (i.e., being defined as illustrated in Fig. 3A).

The warning controlling section 112 controls the warning device to attract attention of the operator (as a warning) if the surroundings detecting device 5a, 5b, and 5c detects a worker (an obstacle) in the detection range set by the detection range determining section. For example, when the work state switching device 101 has been switched to the workable state, the warning controlling section 112 controls the warning device 102 to attract attention of the operator (as a warning) in the cabin 4 if an obstacle such as a worker is detected in the detection range as the first range 121. Moreover, when the work state switching device 101 has been switched to the unworkable state, the warning controlling section 112 controls the warning device 102 to attract attention of the operator (as a warning) in the cabin 4 if an obstacle such as a worker is detected in the detection ranges as the second ranges 122a, 122b, and 122c.

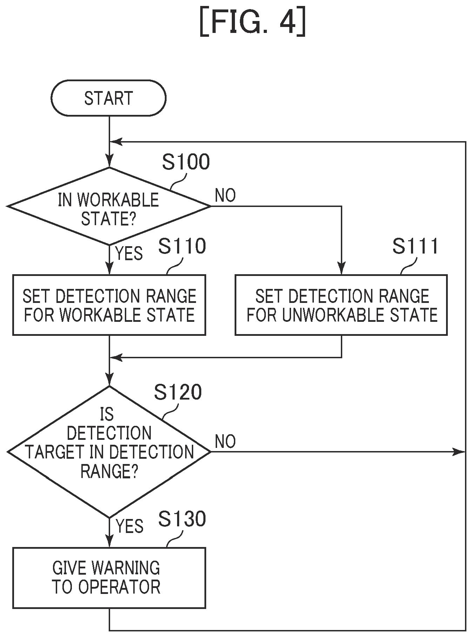

Fig. 4 is a flowchart illustrating the contents of a surroundings detecting process.

As illustrated in Fig. 4, the controller 110 determines whether the hydraulic excavator 100 is in the workable state or not, i.e., whether the work state switching device 101 has been switched to the workable state or not (step S100). If the determined result is YES, then the controller 110 sets the detection range for the workable state, i.e., the first range 121, as the detection range (step S110).

If the determined result in step S100 is NO, i.e., if the work state switching device 101 has been switched to the unworkable state, then the controller 110 sets the detection range for the unworkable state, i.e., the second ranges 122a, 122b, and 122c, as the detection range (step S111).

When the process of setting the detection range (steps S110 and S111) is over, the controller 110 then determines whether a detection target exists in the set detection range or not (step S120). If the determined result is YES, then the controller 110 controls the warning device 102 to attract attention of the operator (as a warning) in the cabin 4 (step S130), after which the processing goes back to the process of step S100.

If the determined result in step S120 is NO, i.e., if there is no detection target in the detection range, then no warning is given to the operator and the processing goes back to the process of step S100.

Advantages of the present embodiment thus configured will be described below.

According to the prior art, there are cases where when a worker is detected in the surroundings of the construction machine while the construction machine is in the unworkable state incapable of operating, a warning is halted, and when the construction machine enters the workable state capable of operating, a warning is output anew. However, in such a case, if the operator of the construction machine starts to operate immediately after the construction machine becomes possible to operate, then a delay is caused to occur until the operator operates to stop the construction machine after a warning has been issued, tending to raise concern over the detection of workers in the surroundings of the construction machine and failures to sufficiently display the meaning of warnings. On the other hand, while the construction machine is in the unworkable state, since it does not operate, the necessity to output a warning to the operator is low even in the presence of a worker in the surroundings of the construction machine, and it is considered that the operator may feel annoyed by warnings. In particular, in the case where a worker in the surroundings of the machine main body (machine body) approaches the operator in the cabin and talks to the operator, since the operator has switched the work state to the unworkable state and recognizes the presence of the worker, the necessity to output a warning to the operator is lower, and it is considered that the operator may feel more strongly annoyed by warnings.

According to the present embodiment, by contrast, if the work state switching device 101 for selectively switching the work state of the construction machine (e.g., the hydraulic excavator 100) between the workable state capable of operating and the unworkable state incapable of operating has been switched to the workable state, the first range 121 predefined in the surroundings of the machine body is set as the detection range, and if the work state switching device 101 has been switched to the unworkable state, the second ranges 122a, 122b, and 122c defined so as to make at least a portion thereof narrower than the first range 121 are set as the detection range. Consequently, it is possible to restrain unnecessary warnings when the construction machine is in the unworkable state and also to report the presence of an obstacle in its surroundings to the operator.

### <Second Embodiment>

A second embodiment of the present invention will be described below.

According to the present embodiment, the surroundings detecting device 5a, 5b, and 5c is capable of determining a plurality of detection targets and the controller 110 switches the detection target depending on the work state selected by the work state switching device 101.

The surroundings detecting device 5a, 5b, and 5c determines the kinds of detection targets on the basis of feature amounts associated with at least one of various kinds of objects and persons that can be selected as the detection targets. Therefore, it is possible to determine whether a detected target is a person such as a worker or another obstacle such as a structure. According to the present embodiment, the surroundings detecting device 5a, 5b, 5c is illustrated as determining the kinds of detection targets. However, information detected by the surroundings detecting device 5a, 5b, 5c may be sent to the warning controlling section 112, and the warning controlling section 112 may determine the kinds of detection targets on the basis of feature amounts and the like.

The detection range determining section 111 switches the detection targets depending on the work state selected by the work state switching device 101. Stated otherwise, the detection range determining section 111 switches the kind of object (person) as a target of determination whether to be detected or not to be detected in the detection range among workers and other structures detected by the surroundings detecting device 5a, 5b, 5c, depending on the work state. For example, when the work state switching device 101 has been switched to the workable state, then workers and other structures are regarded as a detection target, and if what has been detected by the surroundings detecting device 5a, 5b, 5c is a worker and another structure, it is determined whether they exist in the detection range (i.e., they are regarded as a detection target) or not. On the other hand, when the work state switching device 101 has been switched to the unworkable state, then only workers are regarded as a detection target, and even if other structures are detected by the surroundings detecting device 5a, 5b, 5c, they are not regarded as a target to be detected or not to be detected in the detection range.

Other configurational details are identical to those according to the first embodiment.

The present embodiment configured as described above offers the same advantages as those according to the first embodiment.

When a structure is detected and a warning is issued, inasmuch as it is not easy to move the structure, the warning cannot be canceled, tending to let an annoying situation go on. According to the present embodiment, however, since an unnecessary warning can be canceled immediately, an unnecessary annoying situation due to a warning can be avoided.

Furthermore, as a worker is detected and the outputting of a warning is continued, the operator is able to recognize the presence of the worker in the range, and to prompt the worker to leave. In other words, safety can be secured and disturbing warnings can be avoided by evacuating the worker.

### <Third Embodiment>

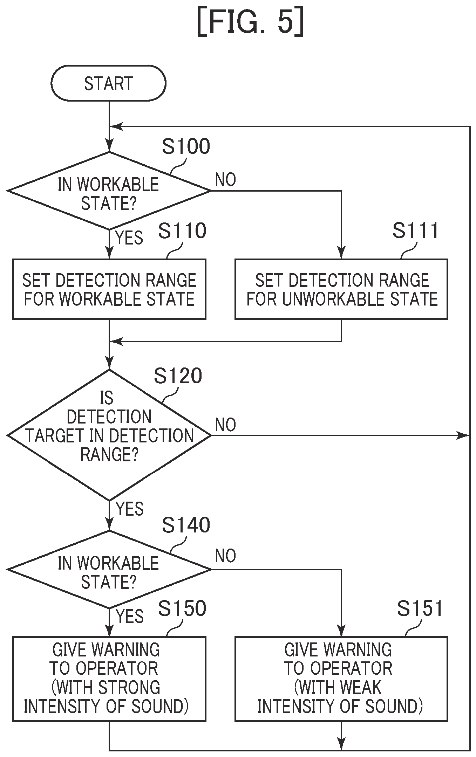

A third embodiment of the present invention will be described below with reference to Fig. 5.

According to the present embodiment, the controller 110 switches the intensity level of the attraction of attention (as a warning) by way of sound from the warning device 102 depending on the work state selected by the work state switching device 101. The intensity level of the attraction of attention is, for example, the magnitude of warning sound, the interval of intermittent warning sounds, the magnitude of warning degree of tone of warning sound or the like.

When the work state switching device 101 has been switched to the workable state, for example, if an obstacle is detected in the detection range, then the warning controlling section 112 controls the warning device 102 to attract attention strongly (e.g., with a higher volume of alarming sound), and when the work state switching device 101 has been switched to the unworkable state, for example, if an obstacle is detected in the detection range, then the warning controlling section 112 controls the warning device 102 to attract attention weakly (e.g., with a lower volume of alarming sound).

Fig. 5 is a flowchart illustrating the contents of a surroundings detecting process.

As illustrated in Fig. 5, the controller 110 determines whether the hydraulic excavator 100 is in the workable state or not, i.e., whether the work state switching device 101 has been switched to the workable state or not (step 100). If the determined result is YES, then the controller 110 sets the detection range for the workable state, i.e., the first range 121, as the detection range (step S110).

If the determined result in step S100 is NO, i.e., when the work state switching device 101 has been switched to the unworkable state, then the controller 110 sets the detection range for the unworkable state, i.e., the second ranges 122a, 122b, and 122c, as the detection range (step S111).

When the process of setting the detection range (steps S110 and S111) is over, the controller 110 then determines whether a detection target exists in the set detection range or not (step S120). If the determined result is NO, then no warning is given to the operator and the processing goes back to the process of step S100.

If the determined result in step S120 is YES, then the controller 110 determines whether the hydraulic excavator 100 is in the workable state or not (step S140). If the determined result is YES, then the controller 110 controls the warning device 102 to attract attention of the operator (as a warning) in the cabin 4 with a strong intensity of sound (step S150), after which the processing goes back to the process of step S100.

If the determined result in step S140 is NO, i.e., if the work state switching device 101 has been switched to the unworkable state, then the controller 110 controls the warning device 102 to attract attention of the operator (as a warning) in the cabin 4 with a weak intensity of sound (step S151), after which the processing goes back to the process of step S100.

Other configurational details are identical to those according to the first embodiment.

The present embodiment configured as described above offers the same advantages as those according to the first embodiment.

Moreover, in the workable state where there is a possibility of contacting an obstacle, the operator can be reliably informed of the existence of the obstacle.

Furthermore, in the unworkable state where there is no possibility of contacting an obstacle, the operator feels less annoyed by subdued warnings while being informed of the existence of obstacles.

### <Others>

The present invention is not limited to the embodiments described above, but covers various modifications without departing from its scope. For example, the present invention is not limited to anything including all the configurational details described according to the above embodiments, but includes those exclusive of some of the configurational details described above. In addition, it is possible to add some of the configurational details according to one of the embodiments to the configurational details according to the other embodiments or replace the configurational details according to one of the embodiments with the configurational details according to the other embodiments. Furthermore, the configurational details of the controller described above and the functions, processing, and the like of those configurational details may be partly or wholly implemented by hardware (e.g., logics for performing the functions may be designed by integrated circuits). Moreover, the configurational details of the controller described above may be implemented by programs (software) that are read and executed by a processor (e.g., a CPU) to realize the functions of the configurational details of the controller. Information relating to the programs can be stored in a semiconductor memory (a flash memory, an SSD, or the like), a magnetic storage device (hard disk drive, or the like), or a recording medium (a magnetic disk, an optical disk, or the like).

### Description of Reference Characters

1: upper swing structure
2: front work implement
2a: boom
2b: arm
2c: bucket
2d: boom cylinder
2e: arm cylinder
2f: bucket cylinder
3: lower track structure
3a, 3b: track hydraulic motor
4: cabin
5a, 5b, 5c: surroundings detecting device
100: hydraulic excavator
101: work state switching device
102: warning device
103: monitor
110: controller
111: detection range determining section
112: warning controlling section
121: first range
122a, 122b, 122c: second range
123a, 123b, 123c: narrower portion

## Claims

1. A construction machine comprising:
a machine body;
a cabin provided on the machine body and occupied by an operator;
a surroundings detecting device that detects an obstacle in surroundings of the machine body;
a warning device provided in the cabin; and
a controller that controls the warning device to attract attention when the surroundings detecting device detects an obstacle in a detection range set in advance, wherein
the construction machine includes a work state switching device that switches the construction machine between a workable state and an unworkable state, and
the controller is configured to
set a first range predefined in the surroundings of the machine body as the detection range when the work state switching device has switched to the workable state, and
set a second range as the detection range, the second range having at least a portion defined as being smaller than the first range, when the work state switching device has switched to the unworkable state.

2. The construction machine according to claim 1, wherein
the cabin is shifted to one side with respect to the machine body in a widthwise direction thereof, and
the second range is defined such that a range set on a side of the cabin in the surroundings of the machine body is smaller than ranges set in other directions.

3. The construction machine according to claim 1, wherein
the warning device attracts attention of the operator by way of at least one of sound or monitor display.

4. The construction machine according to claim 1, wherein
the controller switches the warning device between attracting attention or not attracting attention depending on a work state of the construction machine, the work state being switched by the work state switching device, and a kind of an obstacle detected by the surroundings detecting device.

5. The construction machine according to claim 4, wherein
the controller
controls the warning device to attract attention if the surroundings detecting device detects an object or a person as a detection target in the first range, when the work state switching device has switched to the workable state, and
controls the warning device to not to attract attention if the surroundings detecting device detects an object as the detection target in the second range, and controls the warning device to attract attention if the surroundings detecting device detects a person as the detection target in the second range, when the work state switching device has switched to the unworkable state.

6. The construction machine according to claim 1, wherein
the controller
controls the warning device to attract attention with a predetermined volume of sound if the surroundings detecting device detects an obstacle in the first range, when the work state switching device has switched to the workable state, and
controls the warning device to attract attention with a volume of sound smaller than the predetermined volume of sound if the surroundings detecting device detects an obstacle in the second range, when the work state switching device has switched to the unworkable state.
